# EUROPEAN PATENT APPLICATION

(11) **EP 3 709 469 A1**
(43) Date of publication of application: **16.09.2020**
(21) Application number: 19162184.6
(22) Date of filing: 12.03.2019
(51) Int. Cl.: H02J 5/00, H02M 7/66, H02J 11/00

(54) **REVERSE POWER TRANSMISSION ASSEMBLY**

(71) Applicant: ABB Power Grids Switzerland AG, 5400 Baden (CH)
(72) Inventor: Biskoping, Matthias, 69493 Hirschberg-Leutershausen (DE)
(74) Representative: Epping - Hermann - Fischer

(57) **Abstract**

The present invention relates to power transmission assembly for bidirectional power transmission over a High Voltage Direct Current (DC) line is provided comprising a DC generation station. The DC generation station is configured to generate DC power for DC power transmission to a remote station and is further configured to extract AC power received from the remote station over the DC line. The DC generation station is configured to switch between engaging the extraction of the AC power received from a remote station when the DC generation station not transmitting DC power to the remote station and by-passing the extraction of the AC power when the DC generation station is transmitting DC power to the remote station.

## Description

The present invention relates to a power transmission assembly, a method for transmitting power over a DC line, a program element, and a computer readable medium. More specific, the power transmission assembly relates to a DC generating station for transmitting generated DC power to a remote station over a DC line and receiving AC power from the remote station over the same DC line.

Today, the problem of delivering power-from onshore to offshore, which is only necessary very rarely (no wind, maintenance) is solved by standby Diesel Generators, by more complex converter topologies on the offshore side which allow bidirectional power flow or with an additional power cable from onshore to offshore (lower voltage and power).

The conventional solutions are expensive and therefore, there may be a desire to transmit the power in reverse direction economically.

The problem is solved by the subject-matter of the independent claims. Embodiments are provided by the dependent claims, the following description and the accompanying figures.

The described embodiments similarly pertain to the method for transmitting power over a DC line, the power transmission assembly, the computer program element and the computer-readable medium. Synergetic effects may arise from different combinations of the embodiments although they might not be described in detail.

Further on, it shall be noted that all embodiments of the present invention concerning a method, might be carried out with the order of the steps as described, nevertheless, this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

The invention relates in general to a power transmission arrangement, in which DC power is nominally transmitted into one direction, but due to a circumstance, auxiliary power has to be transmitted in the reverse direction. Therefore, although the description focusses on offshore wind parks as a possible application type, the type is not limited to wind parks.

An offshore wind park comprises a plurality of wind turbines, that generate AC power dependent on, for example, the wind conditions. In several steps, the AC power from the plurality of wind turbines may be converted to DC power and transmitted over an Direct Current (DC) line to an onshore station, that may distribute the power to different onshore locations. In this disclosure, the offshore facilities, which collect, convert and transform the power generated by the wind turbines and provide the power to the DC line, are denominated "DC generation station". The station, which receives the transmitted power on the other or remote side of the DC line, and which may be, e.g., an onshore station, is sometimes denominated "remote station" or, with respect to a main characteristic in this invention, "remote AC generation station", although its functionality is not limited to AC generation. The remote station may also receive and convert DC power and generate DC voltage. In further application examples, both stations, the DC generation station and the remote AC generation station, may be onshore, or both stations may be offshore. For example, the offshore wind park, may need a power transmission line itself. A DC line may be, for example, a High Voltage DC line (HVDC) or a Medium Voltage DC line (MVDC).

In more detail, the DC generation station may be, as an example, an offshore station of, e.g., a wind park, in which a plurality of wind turbines is located. In normal operation mode, the wind turbines generate AC power, which is, e.g., first transformed to DC and provided to a DC power collector rail. The DC power at the DC collector rail is then converted to AC having a specified frequency and is finally transformed and rectified, so that the DC power with the final voltage level can be transmitted over an DC line to a remote station, e.g., an onshore station that may convert and distribute the power to consumers. The offshore DC generation station needs itself power to operate, for example, pumps and electrical devices, which are necessary to operate the station. In normal operation, the power generated by the wind turbines themselves may be used. However, there are situations, where this is not possible. A first situation occurs when no wind is available as primary power source. A second situation occurs when starting up the wind turbines. For these situations and situations, i.e., especially when no or not sufficient DC power is generated to supply the DC generation station itself and the electronic consumption of the connected dc collection devices for starting self-sufficient operation, auxiliary power has to be provided from an onshore station.

According to a first aspect, a power transmission assembly for bidirectional power transmission over a DC line, such as a HVDC line or an MVDC line, is provided comprising a DC generation station. The DC generation station is configured to generate DC power for DC power transmission to a remote station and is further configured to extract AC power received from the remote station over the DC line. The DC generation station is configured to switch between engaging the extraction of the AC power received from a remote station when the DC generation station not transmitting DC power to the remote station and by-passing the extraction of the AC power when the DC generation station is transmitting DC power to the remote station.

According to the first aspect, the AC power is generated as an auxiliary power at a remote station, for example an onshore station, and transmitted to the DC generation station, for example an offshore station. The transmission is performed over an existing DC line, which is also used for the DC power transmission from offshore to onshore in normal mode. Since the line is a DC line, the AC power is superimposed to a DC voltage, which is provided by the remote station. The superimposed AC power can be extracted by an AC power extraction circuit. The extraction circuit is only in use or engaged in such situations when no or not enough DC power is generated to supply the DC station itself and the DC connected devices sufficiently with power.

Engaging or by-passing the AC power extraction circuit may be performed by a switch. The switch may be sensitive to the generated DC voltage and may be closed to by-pass, i.e., to short circuit the AC power extraction circuit, or may be opened when the DC power voltage level is lower than, e.g., the threshold. Embodiments of the AC power extraction circuit are presented further below.

The DC line may be a bipolar or monopolar line. For bipolar transmission, a pair of conductors is used, each at a high potential with respect to ground, in opposite polarity, which might include metallic ground return For monopolar DC power transmission, one conductor is or two conductors are used, whether the return path is metallic or a permanent earth return is used.

In this disclosure, the term "cables" is used for the single conductors, and a pair of conductors is nominated as "line".

According to an embodiment, the DC generation station comprises a DC rectifier circuit, wherein the DC rectifier circuit comprises a first diode rectifier, which is configured to provide the DC power to a first cable and to a second cable of the DC line. The DC rectifier circuit further comprises a first switch, a first capacitor, an AC power extraction circuit, and a second capacitor. The first capacitor, the AC power extraction circuit and the second capacitor are arranged in series between the first cable and the second cable. The first switch is arranged in parallel to the AC power extraction circuit. The DC rectifier circuit is configured to couple the AC power via the first capacitor and the second capacitor to the AC power extraction circuit when the first switch is open; and the DC rectifier circuit is configured to by-pass the AC power extraction circuit when the first switch is closed.

Thus, the term "DC rectifier circuit" comprises the first diode rectifier, which is the main rectifier, that is formed by the actual rectifier elements to rectify the AC from the transformer and provide the DC to the DC line. The main rectifier may comprise diodes, but may alternatively comprise other semiconductor elements, like thyristors, IGBTs,.... The DC rectifier circuit comprises further the extraction circuit. The extraction circuit may comprise a second rectifier, which is to be distinguished from the main rectifier.

The first and the second capacitors are conventionally used to filter the ripple on the DC line. This filtering is maintained in the described circuit when closing the switch, so that the AC power extraction circuit is shorted, and the two capacitors are in series between the two cables. Therefore, in normal mode, when the DC power is transmitted to the remote onshore station, the voltage is smoothed. If the AC power extraction circuit is autarkic, i.e., has no further connection to the main rectifier circuit, no additional measures are necessary to electrically disconnect the circuit from the DC rectifier circuit so that the AC power extraction circuit has no effect on the DC voltage on the cables. In some embodiments there are further connections which are disconnected by an additional switch. Therefore, in normal mode, an operation is possible without any influence or interferences by the AC power extraction circuit.

Having two cables, the AC voltages on these cables may be superimposed monopolar or bipolar. In a bipolar AC transmission, the phases on the two cables might be but not necessarily in-phase; i.e., ideally shifted by zero degrees. In a monopolar AC transmission, the phases on the two cables are usually shifted by 180 degrees but may be shifted in general by any other amount. A capacitance between the two cables is only effective for a voltage difference changing with time, so that in a monopolar system a maximum power transmission via the extraction circuit is achieved at a phase shift of 180 degrees, no power is at 0 degrees, and power between zero and maximum is transmitted at a phase shift between 0 and 180 degrees.

When the AC power extraction circuit is engaged by opening the switch, the AC power is conducted via the capacitors into the AC power extraction circuit whereas the DC is blocked by the capacitors. The AC power can now be rectified and provided to a load, as, for example, another converter, a power supply for the electronics etc. or even the whole collection grid behind the main rectifier.

According to a further embodiment, the AC power extraction circuit is a second diode rectifier comprising a first diode and a second diode in series, a third diode and a fourth diode in series, and a third capacitor. The first diode and the second diode are arranged in parallel to the third diode and the fourth diode and are arranged in parallel to the third capacitor. The first capacitor is connected to a center tap between the first diode and the second diode, and the second capacitor is connected to a center tap between the third diode and the fourth diode. The third capacitor is configured to store the rectified AC current and to provide the stored current to a load.

By this arrangement, the AC power is coupled in via the first capacitor to a center tap between the first diode and the second diode and via the second capacitor to a center tap between the third diode and the fourth diode. The diodes form the second rectifier, which may be a conventional diode rectifier. Alternatively, instead of diodes, other rectifying circuits known to a person skilled in the art, e.g. formed by other semiconductors such as Thyristors, IGBTs,..., may be used. The rectified AC current is stored in the third capacitor, which is in parallel to the serial diode pairs and is available for the load. Since, besides of the coupling of the AC power, there are no further connections to or relations with the DC rectifier, the AC power extracting circuit may be regarded to operate autarkical. Thus, the AC power extracting circuit has no impact on the DC rectifier, when the circuit is by-passed by connecting the first capacitor to the second capacitor.

According to a further embodiment the AC power extraction circuit is a second diode rectifier comprising a first diode and a second diode in series, a third diode and a fourth diode in series, and a third capacitor, the first diode and the second diode being arranged in parallel to the third diode and the fourth diode and in parallel to the third capacitor, a primary side of a transformer is connected between the first capacitor and the second capacitor. One end of the secondary side of the transformer is connected to a center tap between the first diode and the second diode, and a second end of the secondary side of the transformer is connected to a center tap between the third diode and the fourth diode; and the third capacitor is configured to store the rectified AC current and to provide the stored current to a load.

This embodiment allows to couple in the AC power via a transformer. The primary side of the transformer is connected to the first and to the second capacitor, respectively, and induces the AC power to the secondary side, which is connected to the rectifier diodes. With this arrangement, again a complete de-coupling of the circuit is obtained by by-passing the circuit.

According to an embodiment, the DC generation station further comprises, next to the capacitors, the first switch, the AC power extraction circuit and the DC rectifier, a converter and a transformer, wherein the DC rectifier circuit is coupled to the converter over a first secondary tapped winding of the transformer, and the AC power extraction circuit is coupled to the converter over a switchable second secondary tapped winding of the transformer. The AC power extraction circuit is configured to connect the second secondary tapped winding when AC power is transmitted to the DC generation station and to disconnect the second secondary tapped winding when no AC power is transmitted to the DC generation station.

A first secondary tapped winding of the transformer is, in other words, a first winding on the second side of the transformer. The second side of the transformer is the side towards the AC remote station whereas the first side of transformer is the side towards the DC generation station. Accordingly, a second secondary tapped winding of the transformer is a second winding on the second side of the transformer.

The transformer and the converter used in this arrangement are the yet existing converter and transformer for providing the DC power collected by the DC collection grid to the rectifier as explained in the beginning of this description. According to this embodiment, the AC power extraction circuit comprises only the second tapping of the secondary side in this case. The AC power is coupled in via the capacitors and the secondary side of the transformer to the converter. In normal mode, the converter converts DC power, which is the rectified AC power from the wind turbines, to AC, whereas in the AC power extraction or auxiliary mode, the converter is operated in the reverse direction and converts the extracted AC power to DC, which is provided to the load. In order to avoid an impact of the AC power extraction circuit during normal mode, one end of the second tapping of the secondary side has to be disconnected, e.g., by an intelligent switch from the corresponding capacitor.

This embodiment allows to realize the AC extraction by inserting the first and the second switch and the second tapping of the secondary side and, hence, is an effective solution at low cost.

According to a further embodiment, the DC generation station comprises, next to the capacitors, the first switch, the AC power extraction circuit and the DC rectifier, a converter and a transformer a converter and a transformer. The DC rectifier circuit is coupled to the converter over a secondary side of the transformer, and the AC power extraction circuit comprises a second switch between the first capacitor and a first end of the secondary side and comprises a connection between the second capacitor and a second end of the secondary side. When the second switch is open, the converter is configured to convert DC power from a power generator circuit into AC power, the transformer is configured to transmit the AC power from the converter to the DC rectifier circuit, and the DC rectifier circuit is configured to rectify the AC power from the transformer and to provide the AC power via the first cable and the second cable to the remote station. When the second switch is closed, the DC rectifier circuit is configured to provide AC power from the remote station to the transformer, i.e., it is not used as rectifier but to conduct the AC power to the transformer. The transformer is configured to transmit the AC power from the DC rectifier circuit to the converter, and the converter is configured to convert the AC power from the transformer into DC and to provide the DC power to a load.

This embodiment allows to realize the AC extraction by inserting only the first and the second switch. The extraction is performed by conducting the AC power via the first and the second capacitors over the second switch to the transformer and transmitting the AC power to the converter; wherein the capacitors, the transformer and the converter are the same as in the normal mode. Due to the two switches, the AC power can be provided to the DC generation station when needed, and the AC power extraction measures have no impact on the normal mode, specifically on the smoothness of the DC voltage on the HVDC line.

According to an embodiment, the DC rectifier circuit is an electronic power rectifier. The DC rectifier circuit may be composed of diodes, thyristors, IGBTs or further electronic devices.

According to an embodiment, the power transmission assembly further comprises a remote AC generation station. The remote AC generation station is configured to generate a DC voltage, to superimpose AC power on the DC voltage, and to transmit the AC power over the DC line to the DC generation station. The DC line over which the AC power is transmitted may be modeled by line inductivities and capacitances, which depend on the line length, and capacities. The AC power is then conducted via capacitors to the AC power extraction circuit and may pass further inductivities, capacitors or transformers. Therefore, the AC power transmission is subject to a frequency dependent complex impedance resulting in reactive power, which can be used to adjust the amount of power to be received by the DC generation station. Thus, to avoid high reactive power, the frequency may be low (e.g., a few Hertz), and it may be variable and controlled such that the desired amount of power is transmitted. The amplitude of the AC voltage may be adjusted to a low percentage of the nominal DC line voltage.

In order to provide the auxiliary AC power for the DC generation station, the remote station may comprise a DC source and an AC source, wherein the DC and the AC power are superimposed. The DC source may obtain its power from an onshore AC grid and the voltage may be converted to the nominal DC line voltage. In this case, the remote station may comprise a Modular Multilevel Converter (MMC), which in nominal mode converts the DC power from the DC generation station into, e.g. a three phase AC station. In order to provide the AC power, the MMC is operated in reverse direction and converts, e.g., three phase AC power from an onshore AC grid into the nominal DC line voltage, e.g., 640 kV between the two cables in bipolar transmission, and superimposes the AC power with a specified voltage amplitude, e.g., 20 kV. Alternatively, the DC power is obtained by an onshore DC grid, and the AC power portion is generated from the DC power.

According to a further embodiment, the power transmission assembly further comprises a controller. The controller is configured to control the AC power generation in the remote station and the DC generation power generation station such that AC power is generated when the DC power level is lower than a threshold, and the controller is further configured to open the first switch, when AC power is generated and to close the first switch, when the DC power level is higher than a threshold.

By using a controller, the control of at least a part of the processes may be implemented in a control device, comprising, for example, a microcontroller, memories, communication modules and sensors. The microcontroller may collect information about the state of the first switch and, if available, the second switch, the status of the voltages, currents and power in the DC generation station, the DC line and the remote station. The communication modules may transmit information collected by the sensors, transmit and receive further commands and data to microprocessors, that may perform local tasks in the assembly, and commands to switch between the operation modes including controlling actuators or switches.

According to an example, the power transmission assembly may comprise a first and a second controller. The first and the second controllers may be independent of each other. The first controller may be configured to control the first switch, the second switch, and/or the rectifying elements in the DC rectifier, whereas the second controller may be configured to control the AC generation in the remote station. For example, on detecting that the power increases or exceeds a threshold, the first controller closes the first switch and opens the second switch to by-pass and de-couple the extraction circuit. The second controller may detect that DC power is delivered and stop superimposing AC power. A kind of "communication" is therefore performed by the voltage level on the DC line.

The monitoring and control procedures may be defined and implemented by a program element on at least one memory or computer readable medium on which a program element is stored. For example, the program element may be executed by a controller and may instruct the power transmission arrangement to perform the steps the following methods.

According to an aspect, in a method for transmitting power over a DC line, a DC power generation station provides power to a remote station over a DC line in a second operation mode, and the remote station transmits AC power to the DC power generation station over the same DC line in a first operation mode. In the first operation mode, the transmitted AC power is extracted by an AC power extraction circuit in the DC power generation station in order to support a DC power generation, e.g. by wind turbines and related supplying power modules. In a first step of the method, the DC power generation station is started in the first operation mode and the AC power extraction circuit is engaged. The engaging of the AC power extraction circuit may, for example, be performed by opening the first switch in the DC power generation station as described above. For example, the AC power is transformed into DC to start-up an internal controller for starting up the wind turbine operation. In a second step, the DC voltage level at the DC power generation station is monitored continuously. The monitoring may alternatively start as a first step. The monitoring may be performed by a sensor, a measurement device, or an electrical circuit. If the method is executed according to a program element, the monitoring data may be transmitted to the controller, which may evaluate and react on the data by sending control commands or signals as described further below. Alternatively, one or more local electrical circuits are designed such that the following third step is performed by control signals of the electrical circuits. In the third step, the operation mode is switched to the second operation mode, which is also called "normal operation" in this disclosure, and the AC power extraction circuit is by-passed, as soon as the voltage level rises above a first threshold. The first threshold may be a minimal voltage level to transmit power to the remote station but may be in general a voltage level between 0 V and the nominal voltage of the DC transmission. The switching to the second operation mode may comprise the closing of the first switch and, if available the opening of the second switch. It may further comprise the stopping of the generation and the transmission of the AC power from the remote station.

According to an embodiment related to the method described above, in the first operation mode auxiliary power is provided to support a single wind turbine, e.g. to start up a first wind turbine; and in the second operation mode, power is generated by the single wind turbine. The power can, e.g. be used to support the start-up of a second wind turbine, so that successively all other wind turbines are started. For example, electrical devices are powered, that are necessary to operate the second wind turbines and the network. Further, after the step of switching to the second operation mode and by-passing an AC power extraction circuit, if the DC voltage level rises above a first threshold, a fourth step comprises: switching to a third operation mode, if the DC voltage level rises above a second threshold, wherein the third operation mode is an operation mode in which at least one further wind turbine is operated. In the second operation mode, the wind turbine may produce enough power to accelerate its blades.

According to an embodiment, the method further comprises the following fifth step: In the second operation mode or in the third operation mode, switching to the first operation mode and engaging the AC power extraction circuit, if the voltage level falls below the first threshold. This may happen, e.g., if the wind strength is not enough to generate a minimum of DC power to operate the DC generation station and to deliver DC power to the remote station.

According to an embodiment, the AC power is generated and superimposed on a high DC voltage by the remote station in the first operation mode, and the generation of the AC power is stopped in the second operation mode and in the third operation mode, i.e., when at least one wind turbine generates enough power for a transmission of power to the remote station.

These and other features, aspects and advantages of the present invention will become better understood with reference to the accompanying figure and the following description.
Fig. 1a shows a diagram of a power transmission assembly according to an embodiment,
Fig. 1b shows a diagram of a power transmission assembly with a bipolar transmission according to an embodiment,
Fig. 2 shows a diagram of a first power extracting circuit according to an embodiment,
Fig. 3 shows a diagram of a second power extracting circuit according to an embodiment,
Fig. 4 shows a diagram of a third power extracting circuit according to an embodiment,
Fig. 5a shows a diagram of a fourth power extracting circuit according to an embodiment,
Fig. 5b shows a variant of the fourth power extracting circuit according to an embodiment,
Fig. 6 shows a high-level-block diagram of a power transmission assembly including a controller according to an embodiment, and
Fig. 7 shows a high-level-block diagram illustrating the AC power extraction chain options.
Fig. 8 shows a block diagram of a method for transmitting power over a DC line according to an embodiment.

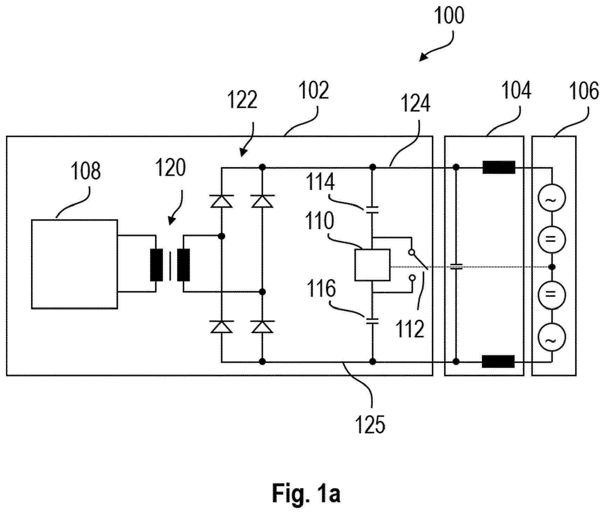

Fig. 1a shows a diagram of a power transmission assembly 100 according to an embodiment, including an offshore transformer 102, a simplified cable model 104 and an onshore converter 106, e.g. an MMC. In normal operation, switch 112 is closed and extraction circuit 110 is by-passed. The voltage, e.g., generated by a wind park, is up-converted by the converter 108 and coupled onto the DC line by transformer 120 and diode arrangement 122, also referred to as "first rectifier" or "main rectifier" in this disclosure. The DC power is transmitted via cable 104, shown here as simple model 104 with inductions and a capacitor to the onshore converter 106, that down-converts the voltage for transmission to further power entities or to a consumer circuit. During, e.g., no-wind situations, there is still the need of power on the offshore side in order to supply e.g. pumps and electronics of the wind farm. For these cases, power is provided from the offshore side to the onshore side. For that, the DC voltage is modulated with an AC voltage, so that a superimposed AC voltage can be transmitted over the DC line to the offshore side. This can be done in differential mode or in common mode. For the common mode operation, the grounded earth connection (dashed line) is needed.

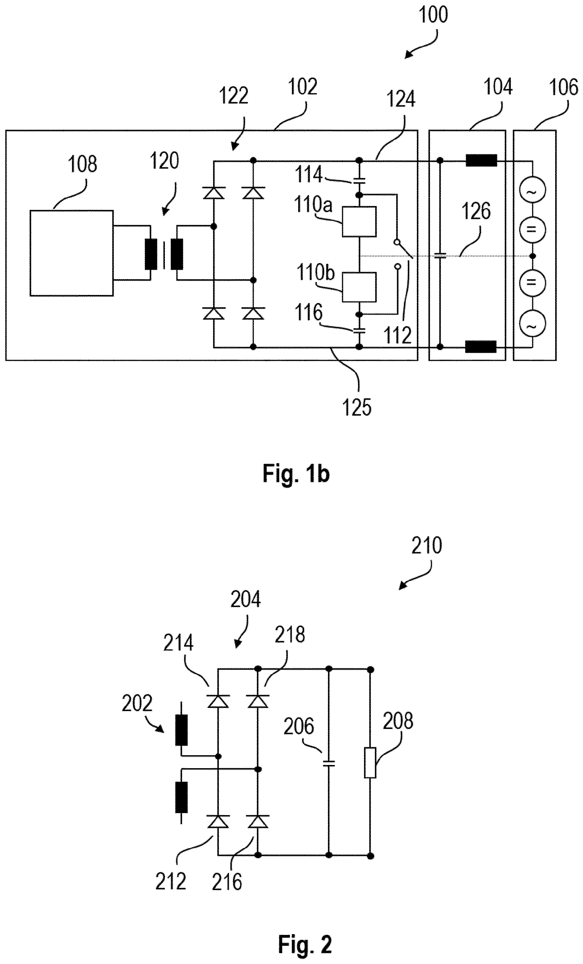

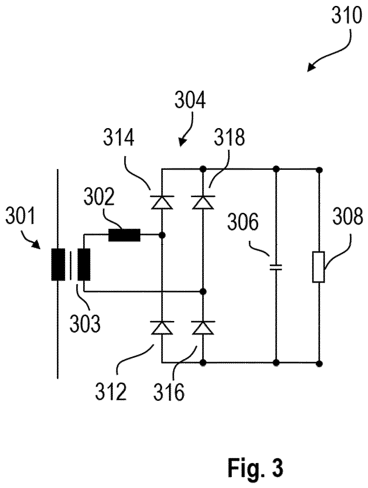

Switch 112 may be a "normally open"-switch, so that when starting the system, the AC current flows via capacities 114 and 116 into the power extracting circuit 110. There are two options how to design AC power extracting circuit 110, which will be explained with Fig. 2 and Fig. 3.

Fig. 2 shows as a first sample design a simple diode rectifier 210 representing the AC power extracting circuit 110 in Fig. 1a or the circuits 110a, 110b in Fig. 1b. The current entering the power extracting circuit 110 through capacitors 114 and 116 is lead to the diode arrangement 204 over the line comprising parasitic line impedances 202. The current is stored in capacitor 206 and provided to the resistor 208, which is a representation of a load. The load can be for example another converter, a power supply for the electronics, etc.

Fig. 1b shows a similar diagram as Fig 1a. In Fig. 1b, the extraction circuit 110 is doubled into 110a and 110b, so that a bipolar AC transmission is possible. In the bipolar system, a phase shift of 0 degrees between the voltage on cables 124 and 125 is possible, since each of the voltages on 124 and 125 are related to the neutral voltage on line 126. AC power can be extracted in each of the circuits 110a and 110b.

Fig. 3 shows a further sample implementation of the power extracting circuit 110 in Fig. 1a (circuits 110a, 110b in Fig. 1b). The AC power extraction circuit 110, 110a, 110b is represented as a secondary diode rectifier. In this example, the current is coupled in over the primary side of transformer 301 and rectified on the secondary side. Inductivity 302 represents a parasitic line impedance. The AC current is rectified by the rectifier diodes in the diode assembly 304, is stored in the capacitor 306 and finally provided to the resistor 308, which may represent various loads.

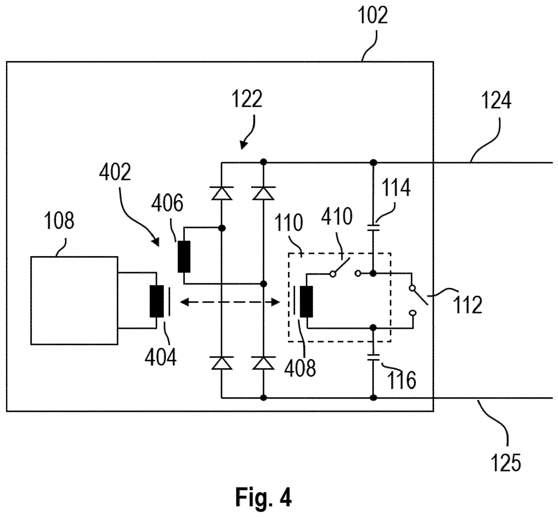

Fig. 4 shows an example where the AC power extraction is performed by conducting the current coming in from capacitors 114 and 116 to a second secondary side of transformer 406. In this case, the onshore AC power is transferred to the offshore entities, e.g. a wind turbine, using the same transformer as the DC generation, that provides the power generated by the wind turbines to the DC rectifier of the DC generator station.

In normal operation, for example when power is transmitted from offshore to onshore, and no power is transmitted in the opposite direction, switch 410 is off, so that no AC power is transmitted from the converter 108 over the primary 404 and second secondary 408 windings of transformer 402 to the DC line. If, however, AC power shall be extracted from the DC line, switch 410 is closed, so that the AC power can be provided to the offshore entities in the way explained above. To start up the system, therefore, switch 410 has to be closed. Thus, switch 410 is of type "normally closed".

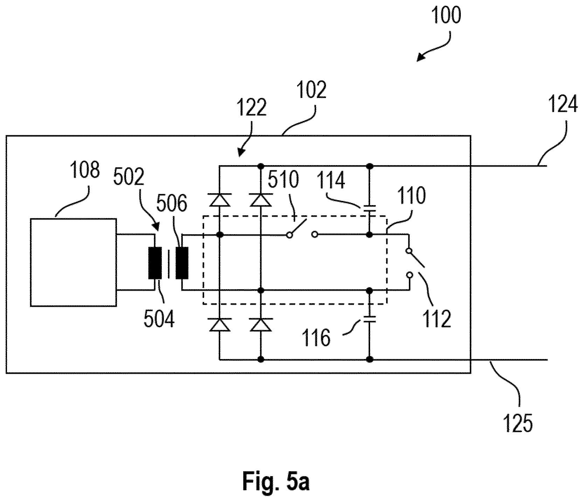

Fig. 5a shows a similar option as Fig. 4, however, the first secondary side 506 of transformer 502 is used for both, the normal operation and the AC extraction. This is obtained by connecting one end of the secondary side 506 to the capacitor 114 and the other end of the secondary side 506 to the capacitor 116. By turning switch 510 off in normal mode, an AC power transfer from the converter 108 to the DC line is avoided. To start-up the system switch 510 has to be closed. Thus, switch 510 is of type "normally closed".

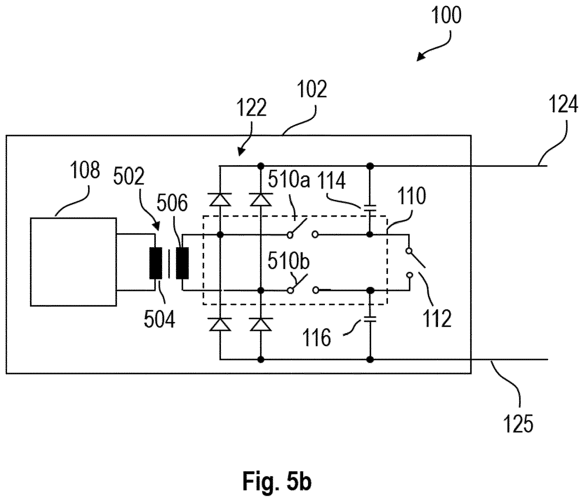

Fig. 5b shows a variant of the diagram shown in Fig. 5a, where two switches 510a and 510b are inserted. The rectifier in Fig. 5a doubles the DC voltage, which is not the case when the two switches 510a and 510b in Fig. 1B are switched at the same time. The switches 510a and 510b may be connected mechanically or controlled in such a way, that a simultaneous switching is achieved.

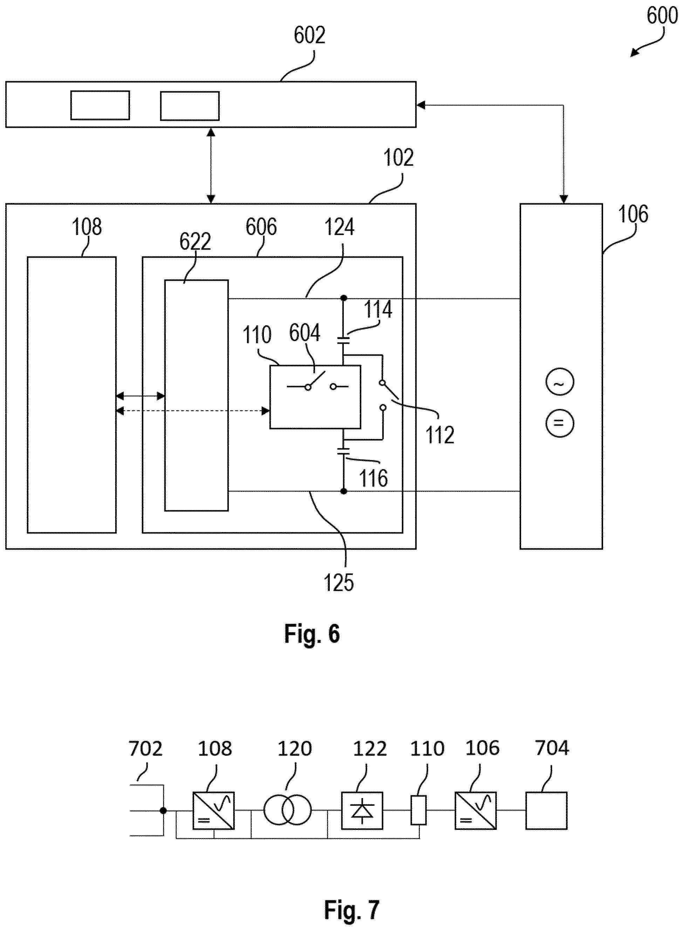

Fig. 6 depicts a power transmission assembly according to an embodiment. The assembly comprises an offshore transformer 102 with a converter 108 DC rectifier 622, a DC generation station 102 and a remote AC generation station 106.The DC generation station 102 comprises an AC power extraction circuit 604. The DC generation station is configured to generate DC power using DC rectifier 622 and to transmit the DC power over a DC line 104 in a first direction away from the DC generation station 102. The remote AC generation station 106 is configured to generate AC power for transmission of the AC power over the DC line 104 in a second direction towards the DC generation station 102. The AC power extraction circuit 110 is configured to extract the AC power from the DC line 104 provided by the capacitors 114 and 116 which provide the AC power to the AC power extraction circuit 604. According to various embodiments, the extracted AC power may be rectified by the AC power extraction circuit 110 where a load can be supplied with DC power, or the AC power may be provided over a switch 604 to the DC converter 108 as described above. A control circuit comprising a processor 608 and a memory 610 may control the assembly.

Fig. 7 illustrates the various possibilities that arise by using an arrangement as described above with the AC power extraction circuit 110, capacitors 114 and 116 (not shown in Fig. 7) and switch 112 (not shown in Fig. 7).

In normal mode, converter 106 receives in a first direction the DC power from the DC power collector grid 702 via converter 108, transformer 120, and rectifier 122 over the DC line and converts the DC power to AC power and provides it to the AC power grid 704.

In auxiliary mode, converter 106 generates the DC voltage and superimposes AC power on the DC voltage, which is transmitted over the DC line to the switchable AC power extraction circuit 110. Depending on the implemented embodiment, the AC power extraction circuit 110 may provide the auxiliary power to the DC collector grid in various ways, as summarized in the following:
The extracted power can be fed into the DC collection grid 702 at different locations of the topology:
   - at 706 or 708 using, e.g., arrangements according to the examples shown in Figs. 2 and 3;
   - at 710 using, e.g., an arrangement according to the example shown in Fig. 4; and
   - at 712 or 714 using, e.g., an arrangement according to the example shown in Fig. 5a or Fig. 5b.

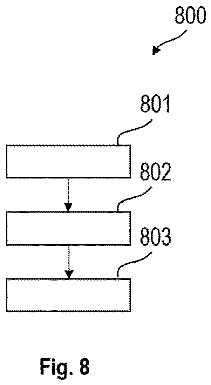

Fig. 8 shows a block diagram of a method (800) for transmitting power over a DC line, wherein a DC power generation station provides power to a remote station over a DC line in a second operation mode; and wherein a remote station transmits AC power to the DC power generation station over the DC line in a first operation mode, in which the transmitted AC power is extracted by an AC power extraction circuit in the DC power generation station in order to support a DC power generation. The method (800) comprises the following steps:
starting (801) the DC power generation station in the first operation mode and engaging the AC power extraction circuit;
monitoring (802) continuously the DC voltage level at the DC power generation station;
switching (803) to the second operation mode and by-passing an AC power extraction circuit, if the voltage level rises above a first threshold.

An example for a possible wind park startup operation is provided in the following:
Initially, the wind park is supplied with a voltage level, that is lower than the nominal voltage level, provided by the AC generation station 106 via the AC power extraction circuit 110. In a next step, the wind converter 108 supplies itself (from the lower offshore voltage level). Then, the wind turbine starts to accelerate, and it starts to generate power which is fed into the lower than nominal offshore voltage grid. The wind turbine that started increases the voltage above the lower limit and towards the nominal voltage level. This increased offshore voltage level triggers the first switch, i.e., the auxiliary power switch, which closes and hence, disconnects the auxiliary transformer on the primary side by by-passing it. Furthermore, depending on the extraction arrangement, the normally closed switch is opened in order to disconnect the main transformer. This also starts the offshore converter. Other wind turbines can kick in above a certain voltage level and they also start to supply power to the offshore grid which is then transferred via the offshore converter to the high voltage level via the passive diode rectifier. As soon as power is delivered onshore, the onshore converter stops to induce the AC power ripple, which may be, e.g., 20 kV at 5 Hz.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication assemblies. Any reference signs in the claims should not be construed as limiting the scope of the claims.

## Claims

1. Power transmission assembly (100) for bidirectional power transmission over a DC line, comprising
a DC generation station (120) configured to generate DC power for DC power transmission to a remote station (106);
wherein the DC generation station (120) is further configured to extract AC power received from a remote station (106) over the DC line (124, 125); and
wherein the DC generation (120) station is further configured to switch between engaging the extraction of the AC power received from a remote station (106) when not transmitting DC power to the remote station (106), and by-passing the extraction of the AC power when transmitting DC power to the remote station (106).

2. Power transmission assembly according to claim 1, wherein the DC generation station (120) comprises
a DC rectifier circuit (606), wherein the DC rectifier circuit (606) comprises a first diode rectifier (622), which is configured to provide the DC power to a first cable (124) and to a second cable (125) of the DC line;
wherein the DC rectifier circuit (606) further comprises
a first switch (112);
a first capacitor (114);
an AC power extraction circuit (110); and
a second capacitor (116);
wherein the first capacitor (114), the AC power extraction circuit (110) and the second capacitor (116) are arranged in series between the first cable (124) and the second cable (125);
wherein the first switch (112) is arranged in parallel to the AC power extraction circuit (110); and
wherein the DC rectifier circuit (606) is configured to couple the AC power via the first capacitor (114) and the second capacitor (116) to the AC power extraction circuit (110) when the first switch (112) is open; and to by-pass the AC power extraction circuit (110) when the first switch (112) is closed.

3. Power transmission assembly according to claim 2, wherein the AC power extraction circuit (110) is a second diode rectifier (204) comprising
a first diode (212) and a second diode (214) in series;
a third diode (216) and a fourth diode (218) in series; and
a third capacitor (206);
the first diode (212) and the second diode (214) being arranged in parallel to the third diode (216) and the fourth diode (218) and being arranged in parallel to the third capacitor (206);
wherein the first capacitor (114) is connected to a center tap between the first diode (212) and the second diode (214), and the second capacitor (116) is connected to a center tap between the third diode (216) and the fourth diode (218); and
wherein the third capacitor (206) is configured to store the rectified AC current and to provide the stored current to a load (208).

4. Power transmission assembly according to claim 2, wherein
the AC power extraction circuit (110) is a second diode rectifier (304) comprising a first diode (312) and a second diode (314) in series, a third diode (316) and a fourth diode (318) in series, and a third capacitor (316), the first diode (312) and the second diode (314) being arranged in parallel to the third diode (316) and the fourth diode (318) and in parallel to the third capacitor (306);
wherein a primary side (301) of a transformer is connected between the first capacitor (114) and the second capacitor (116);
wherein one end of the secondary side (303) of the transformer is connected to a center tap between the first diode (312) and the second diode (314), and a second end of the secondary side (303) of the transformer is connected to a center tap between the third diode (316) and the fourth diode (318); and
wherein the third capacitor (206) is configured to store the rectified AC current and to provide the stored current to a load (208).

5. Power transmission assembly according to claim 2, wherein
the DC generation station (120) further comprises a converter (108) and a transformer (402),
wherein the DC rectifier circuit (606) is coupled to the converter (108) over a first secondary tapped winding (406) of the transformer (402), and the AC power extraction circuit (110) is coupled to the converter (108) over a switchable second secondary tapped winding (408) of the transformer (402); and
wherein the AC power extraction circuit (110) is configured to connect the second secondary tapping (408) when AC power is transmitted to the DC generation station (120) and to disconnect the second secondary tapping (408) when no AC power is transmitted to the DC generation station (120).

6. Power transmission assembly according to claim 2, wherein
the DC generation station (120) further comprises a converter (108) and a transformer (502),
wherein the DC rectifier circuit (606) is coupled to the converter (108) over a secondary side (506) of the transformer (502), and
the AC power extraction circuit (110) comprises a second switch (510) between the first capacitor (114) and a first end of the secondary side (506) and a connection between the second capacitor (116) and a second end of the secondary side (506);
wherein, when the second switch is open, the converter is configured to convert DC from a power generator circuit into AC, the transformer is configured to transmit the AC from the converter (108) to the DC rectifier circuit (606), and the DC rectifier circuit (606) is configured to rectify the AC from the transformer 102 and to provide the AC power vie the first cable 124 and the second cable 125 to the remote station (106); and
wherein, when the second switch (510) is closed, the DC rectifier circuit (606) is configured to provide AC current from the remote station (106) to the transformer (502), the transformer (502) is configured to transmit the AC current from the DC rectifier circuit (606) to the converter (108), and the converter (108) is configured to convert the AC from the transformer (502) into DC and to provide the DC power to a load.

7. Power transmission assembly according to any previous claim, wherein the DC rectifier circuit (606) is an electronic power rectifier.

8. Power transmission assembly according to any previous claim, further comprising a remote AC generation station (106),
wherein the remote AC generation station (120) is configured to generate a DC voltage, to superimpose AC power on the DC voltage, and to transmit the AC power over the DC line (124, 125) to the DC generation station (120).

9. Power transmission assembly according to any previous claim, further comprising a controller (602), wherein the controller (602) is configured to control the AC power generation in the remote station and the DC power generation in the DC power generation station such that AC power is generated when the DC power level is lower than a threshold, and wherein the controller is further configured to open the first switch (112), when AC power is generated and to close the first switch (112), when the DC power level is higher than a threshold.

10. Method (800) for transmitting power over a DC line,
wherein a DC power generation station provides power to a remote station over a DC line in a second operation mode;
wherein a remote station transmits AC power to the DC power generation station over the DC line in a first operation mode, in which the transmitted AC power is extracted by an AC power extraction circuit in the DC power generation station in order to support a DC power generation;
comprising the steps:
starting (801) the DC power generation station in the first operation mode and engaging the AC power extraction circuit;
monitoring (802) continuously the DC voltage level at the DC power generation station;
switching (803) to the second operation mode and by-passing an AC power extraction circuit, if the voltage level rises above a first threshold.

11. Method according to claim 10,
wherein in the first operation mode a single wind turbine is supported; wherein in the second operation mode power is generated by the single wind turbine is operated;
wherein the method after the step switching to the second operation mode and by-passing an AC power extraction circuit, if the DC voltage level rises above a first threshold, further comprises the step:
switching to a third operation mode, if the DC voltage level rises above a second threshold, wherein the third operation mode is an operation mode in which at least one further wind turbine is operated.

12. Method according to claim 10 or 11, wherein the method further comprises the step:
In the second operation mode or in the third operation mode, switching to the first operation mode and engaging the AC power extraction circuit, if the voltage level falls below the first threshold.

13. Method according to claim 11 or 12, wherein the AC power is generated and superimposed to a high DC voltage by the remote station in the first operation mode, and wherein the generation of the AC power is stopped in the second operation mode and in the third operation mode.

14. Program element, which when being executed by a controller, instructs the power transmission assembly to perform the steps of one of the claims 10 to 13.

15. Computer readable medium on which a program element according to claim 14 is stored.
